# EUROPÄISCHE PATENTSCHRIFT

(11) **EP 3 631 100 B1**
(45) Veröffentlichungstag und Bekanntmachung des Hinweises auf die Patenterteilung: **01.12.2021**
(21) Anmeldenummer: 18706264.1
(22) Anmeldetag: 20.02.2018
(51) Int. Cl.: E03D 3/06

(54) **SANITÄRVENTIL MIT EINER MEMBRAN**
SANITARY VALVE WITH A DIAPHRAGM
VALVE DE PLOMBERIE COMPRENANT UNE MEMBRANE

(30) Priorität: 26.05.2017 DE 202017103194 U
(43) Veröffentlichungstag der Anmeldung: 08.04.2020
(60) Teilanmeldung: 20171601.6
(73) Patentinhaber: Neoperl GmbH, 79379 Müllheim (DE)
(72) Erfinder: TEMPEL, Marc, 79111 Freiburg (DE); BIAN, Yichao, 79379 M llheim-H gelheim (DE)
(74) Vertreter: Mertzlufft-Paufler, Cornelius
(86) Internationale Anmeldenummer: PCT/EP2018/054150
(87) Internationale Veröffentlichungsnummer: WO 2018/215098

(56) Entgegenhaltungen:
- CN-U- 206 130 278
- CN-U- 206 130 278
- DE-A1-102012 221 047
- DE-U1-202016 001 106

## Beschreibung

Die Erfindung betrifft ein Sanitärventil gemäß Anspruch 1 zum Einsatz in einer Armatur, mit einem Ventilgehäuse, einem Hauptventil, das eine bewegliche Membran aufweist, und einem Pilotventil, mit welchem das Hauptventil ansteuerbar ist, wobei eine Position der Membran durch eine Stellung eines Ventilstößels des Pilotventils vorgebbar ist.

Derartige Sanitärventile sind bereits bekannt. Sie werden beispielsweise in Armaturen eingesetzt, um einen Wasserstrom innerhalb der Armatur mittels einer möglichst geringen Betätigungskraft und/oder mit einem möglichst weichen Schaltverhalten zu- oder umschalten zu können. DE102012221047A1, DE202016001106U1 und CN206130278U offenbaren Sanitärventile gemäß dem Stand der Technik.

Der Flüssigkeitsstrom durch das Ventil kommt dabei häufig mit der Armatur selbst in Kontakt. Dies kann dann nachteilig sein, wenn die Armatur aus einem wasserempfindlichen Material, wie beispielsweise aus Holz, oder aus teilweise gesundheitsschädlichen Materialien besteht. Durch den Kontakt mit Wasser kann die Armatur beschädigt werden und/oder eine unerwünschte Kontamination des Wassers zur Folge haben.

Ein weiterer Nachteil vorbekannter Sanitärventile der eingangs beschriebenen Art besteht darin, dass ein Schlauchanschluss an derartigen Sanitärventilen über zusätzliche Adapterteile erfolgen muss, die zu diesem Zweck mit dem Ventilgehäuse verbunden werden müssen. Nachteilig bei vorbekannten Sanitärventilen ist weiter, dass das Anbringen eines Mundstücks oder eines Strahlreglers an einer abströmseitig vom Hauptventil gelegenen Ablauföffnung bei derartigen Sanitärventilen aufgrund ihrer Konstruktionsweise und ihrer vorgesehenen Anordnung innerhalb der Armatur nicht möglich ist. Hier werden zumeist weitere Zwischenstücke, wie Schläuche, gebraucht, die eine Verbindung des Sanitärventils mit einem Mundstück oder einem Strahlregler erlauben.

Der Erfindung liegt daher die Aufgabe zugrunde, ein Sanitärventil mit verbesserten Gebrauchseigenschaften zu schaffen, vorzugsweise wodurch eine Einsparung zusätzlicher Anschlussteile zum Anschluss eines Schlauchs und/oder eines Mundstücks und/oder eines Strahlreglers möglich ist.

Zur Lösung der Aufgabe sind erfindungsgemäß die Merkmale nach Anspruch 1 vorgesehen. Insbesondere wird somit erfindungsgemäß zur Lösung der Aufgabe bei einem Sanitärventil der eingangs erwähnten Art vorgeschlagen, dass an dem Ventilgehäuse ein einer Zulauföffnung des Ventilgehäuses zugeordnetes Schlauchbefestigungsmittel ausgebildet ist. Durch die Ausbildung des Schlauchbefestigungsmittels am Ventilgehäuse selbst, kann ein Schlauch direkt mit dem Ventilgehäuse verbunden werden. Dazu bedarf es keinerlei weiterer Anschlussteile, die zwischen dem Schlauch und dem Ventilgehäuse zwischengeschalten sind. Es ist lediglich erforderlich, dass der Schlauch ein geeignetes Anschlusselement aufweist, durch welches er am Schlauchbefestigungsmittel befestigbar oder befestigt ist. Auf diese Weise kann eine Montage des Sanitärventils besonders einfach vorgenommen werden, indem der Schlauch durch eine Durchtrittsöffnung einer Armatur geführt wird und außerhalb eines Ventilaufnahmeraums der Armatur mit dem Ventilgehäuse verbindbar ist oder verbunden wird. Nach der Befestigung des Schlauchs am Ventilgehäuse ist das Sanitärventil mitsamt Schlauch einfach in den Ventilaufnahmeraum einsetzbar. Weitere Anschlussteile sind dafür nicht erforderlich, was eine besonders kostengünstige Lösung zum Anschluss des Schlauches am Sanitärventil ermöglicht.

Gemäß einer weiteren Lösung der Aufgabe, die alternativ oder ergänzend zu den zuvor genannten Merkmalen vorgesehen sein kann, wird erfindungsgemäß vorgeschlagen, dass an dem Ventilgehäuse ein einer Ablauföffnung des Ventilgehäuses zugeordnetes Mundstückbefestigungsmittel und/oder ein Strahlreglerbefestigungsmittel ausgebildet ist. Durch die Ausbildung eines Mundstückbefestigungsmittels und/oder eines Strahlreglerbefestigungsmittels direkt am Ventilgehäuse ist das Mundstück und/oder der Strahlregler unmittelbar, also ohne zusätzliche Anschlussteile am Ventilgehäuse befestigbar. Dabei ist es lediglich erforderlich, dass ein befestigbares Mundstück und/oder ein befestigbarer Strahlregler ein geeignetes Anschlusselement aufweist/aufweisen, durch welches es/er/sie am Mundstückbefestigungsmittel und/oder am Strahlreglerbefestigungsmittel befestigbar oder befestigt ist/sind. Auf diese Weise ist eine besonders einfache Montage und/oder Festlegung des Sanitärventils ohne zusätzliche Fixierungsbauteile in einer Armatur möglich.

Gemäß einer zusätzlichen Lösung der Aufgabe, die alternativ oder ergänzend zu den zuvor genannten Merkmalen vorgesehen sein kann, weist das Sanitärventil erfindungsgemäß eine Klemmenvorrichtung auf, mit der das Ventilgehäuse und ein Verstelleinrichtungsteil fest miteinander verbindbar oder verbunden sind. Das Verstelleinrichtungsteil umfasst das Pilotventil, mittels welchem die Membran des Hauptventils ansteuerbar ist. Um die Mechanik des Verstelleinrichtungsteil beim Einbau des Sanitärventils in eine Armatur schonen zu können, ist es vorteilhaft, wenn das Verstelleinrichtungsteil und das Ventilgehäuse nicht einteilig, sondern zweiteilig, ausgestaltet sind. So kann zunächst eine Befestigung eines Schlauchs am Schlauchbefestigungsmittel des Ventilgehäuses vorgenommen werden, ohne dass das Verstelleinrichtungsteil mit dem Ventilgehäuse verbunden ist. Nach Befestigung des Schlauches am Ventilgehäuse ist mittels der Klemmenvorrichtung eine Kopplung des Ventilgehäuses mit dem Verstelleinrichtungsteil möglich. Vorzugsweise ist die Klemmenvorrichtung so ausgelegt, dass ein lösbares Verkoppeln möglich ist, was beispielsweise zweckmäßig ist, um eine Wartung oder Reinigung des Sanitärventils einfacher vornehmen zu können, insbesondere um defekte Ventilgehäuse oder Verstelleinrichtungsteile getrennt voneinander austauschen zu können.

Um ein einfaches Herausnehmen des Sanitärventils aus einer Armatur, insbesondere ohne Lösen des Schlauches, zu ermöglichen, aber gleichzeitig ein zu tiefes Einführen des Sanitärventils in Montagestellung in einen Ventilaufnahmeraum in Einschubrichtung zu verhindern, kann es besonders zweckmäßig sein, wenn das Schlauchbefestigungsmittel einen maximalen Außendurchmesser aufweist, der kleiner ist als ein maximaler Außendurchmesser eines am Ventilgehäuse ausgebildeten oder angebrachten Anlageelements zum Anlegen des Ventilgehäuses an einer Wand der Armatur, wobei die Wand eine Durchtrittsöffnung mit einem lichten Innendurchmesser hat, der größer ist als der maximale Außendurchmesser des Schlauchbefestigungsmittels. Armaturen weisen einen Ventilaufnahmeraum auf, in welchen ein Sanitärventil einsetzbar ist. Durch die Armatur verläuft ein Schlauch zur Wasserzuleitung an eine Zulauföffnung des Sanitärventils. Damit das Sanitärventil nicht zu tief in Einschubrichtung in den Ventilaufnahmeraum einführbar ist, weist das Sanitärventil ein Anlageelement und die Armatur die Wand auf, die einen Anschlag für das Anlageelement bildet. Der Anschlag definiert eine maximale Einschubtiefe in die Armatur, in welcher das Anlageelement die Wand beaufschlagt. Die Durchtrittsöffnung der Wand ist zur Durchführung des Schlauchs in den Ventilaufnahmeraum ausgestaltet. Durch die kleinere Ausgestaltung des maximalen Außendurchmessers des Schlauchbefestigungsmittels im Vergleich mit dem maximalen Außendurchmesser des Anlageelements, kann das gesamte Sanitärventil zusammen mit dem am Schlauchbefestigungsmittel befestigten Schlauch aus dem Ventilaufnahmeraum entfernt werden, wobei der Schlauch durch die Durchtrittsöffnung herausziehbar ist, sodass das Sanitärventil mitsamt dem daran befestigten Schlauch komplett aus der Armatur entnehmbar ist. Dadurch ist sowohl die Montage als auch die Wartung ohne Lösen des Schlauchs vom Ventilgehäuse möglich. Ein weiterer Vorteil dieser Ausgestaltung besteht darin, dass das Schlauchbefestigungsmittel und der daran befestigte Schlauch vollständig in die Durchtrittsöffnung einführbar sind, also dann zuströmseitig von der Wand der Armatur angeordnet sind, wodurch weniger Platz für die Komponenten des Sanitärventils notwendig ist, die in Montagestellung abströmseitig von der Wand angeordnet sind.

Eine besonders vorteilhafte, da stabile Befestigung des Schlauches am Ventilgehäuse kann dadurch erreicht werden, dass das Schlauchbefestigungsmittel ein Außengewinde zum Anschluss eines korrespondierenden Innengewindes aufweist. Besonders zweckmäßig kann es dabei sein, wenn das Sanitärventil eine Befestigungsmuffe mit einem zum Außengewinde korrespondierenden Innengewinde aufweist, wobei die Befestigungsmuffe mit einem Schlauch verbindbar oder verbunden ist. Diese Ausgestaltung zeichnet sich durch eine einfachere Fertigung aus. Alternativ dazu kann es ebenso vorgesehen sein, dass das Schlauchbefestigungsmittel ein Innengewinde zum Anschluss eines korrespondierenden Außengewindes aufweist. Besonders zweckmäßig kann es dabei sein, wenn das Sanitärventil eine Befestigungsmuffe mit einem zum Innengewinde korrespondierenden Außengewinde aufweist, wobei die Befestigungsmuffe mit einem Schlauch verbindbar oder verbunden ist. Gegenüber der ersten Alternative weist diese eine aufwendigere Fertigung auf. Eine weitere Möglichkeit kann vorsehen, dass das Schlauchbefestigungsmittel als Sicherungsplatte mit einer Schlauchaufnahme ausgestaltet ist.

Um die Anzahl der Einzelkomponenten des Sanitärventils möglichst gering halten zu können, kann es vorteilhaft sein, wenn das Sanitärventil ein Mundstück aufweist, dass direkt am Mundstückbefestigungsmittel befestigbar oder befestigt ist, wobei das in einem Ventilaufnahmeraum der Armatur eingesetzte Sanitärventil mittels des am Mundstückbefestigungsmittel befestigten Mundstücks an der Armatur fixierbar oder fixiert ist. Dadurch kann ein ungewolltes Herausnehmen oder Herausrutschen des in Montagestellung in den Ventilaufnahmeraum eingesetzten Sanitärventils verhindert werden, da das an dem Mundstückbefestigungsmittel befestigte Mundstück soweit aus einer Austrittsöffnung in einer Außenwand der Armatur herausragt, dass dadurch das Sanitärventil in axialer Richtung fixiert ist, indem das Mundstück zumindest mit einer Seitenwand an einem Rand der Austrittsöffnung anliegt.

Alternativ oder ergänzend dazu kann es zum Erreichen einer solchen Festlegung des Sanitärventils ebenso vorteilhaft sein, wenn das Sanitärventil einen Strahlregler aufweist, der direkt am Strahlreglerbefestigungsmittel befestigbar oder befestigt ist, wobei das in einem Ventilaufnahmeraum der Armatur eingesetzte Sanitärventil mittels des am Strahlreglerbefestigungsmittel befestigten Strahlreglers an der Armatur fixierbar oder fixiert ist.

Um eine besonders gute Fixierung des Sanitärventils in Montagestellung zu erreichen, kann es zweckmäßig sein, wenn das Sanitärventil alternativ oder ergänzend dazu einen Sicherungsring aufweist, durch welchen das Ventil an der Armatur fixierbar ist. Dabei kann es besonders zweckmäßig sein, wenn der Sicherungsring an einem Rand einer Einschuböffnung der Armatur befestigbar ist und in Montagestellung das in die Armatur eingesetzte Sanitärventil im Ventilaufnahmeraum fixiert. Der Sicherungsring kann beispielsweise als ein Sprengring ausgestaltet sein. Im eingesetzten Zustand kann der Sprengring in eine Nut am Rand der Einschuböffnung eingreifen und das Sanitärventil an der Armatur axial festlegen. Durch die Verwendung eines kostengünstig herstellbaren Sprengrings können die Herstellungskosten des Sanitärventils insgesamt reduziert werden, wobei dennoch eine sehr stabile axiale Festlegung des Sanitärventils möglich ist.

Zur Erzeugung eines weichen, spritzfreien Wasserstrahls kann es zweckmäßig sein, wenn ein oder das bereits zuvor erwähnte Mundstück einen Strahlregler aufweist oder ein Strahlregler zwischen einem oder dem zuvor bereits genannten Mundstück und einer oder der zuvor bereits genannten Ablauföffnung angeordnet ist.

Um das Sanitärventil in einer in den Ventilaufnahmeraum eingesetzten Montagestellung mittels des befestigbaren oder befestigten Mundstücks oder des befestigbaren oder befestigten Strahlreglers besonders stabil an der Armatur fixieren zu können, kann es vorteilhaft sein, wenn ein oder das bereits zuvor genannte Mundstück oder ein oder der bereits zuvor bereits genannte Strahlregler ein Innengewinde und/oder das Ventilgehäuse an der Ablauföffnung, insbesondere am Mundstückbefestigungsmittel oder am Strahlreglerbefestigungsmittel, ein korrespondierendes Außengewinde aufweist oder dass ein oder das Mundstück oder ein oder der Strahlregler ein Außengewinde und/oder das Ventilgehäuse an der Ablauföffnung, insbesondere am Mundstückbefestigungsmittel oder am Strahlreglerbefestigungsmittel, ein korrespondierendes Innengewinde aufweist.

Damit das durch das Sanitärventil strömende Wasser nicht mit der Armatur in Verbindung tritt, kann es vorteilhaft sein, wenn durch das Ventilgehäuse und das Verstelleinrichtungsteil ein zur Armatur hin geschlossener Kanal und/oder eine zur Armatur hin geschlossene Druckkammer ausbildet ist, wodurch kein Kontakt zwischen einer durch das Sanitärventil strömenden Flüssigkeit und der Armatur möglich ist. Dabei bilden das Ventilgehäuse und das Verstelleinrichtungsteil zur Armatur hin eine Barriere aus. Verbindungstellen zwischen dem Ventilgehäuse und dem Verstelleinrichtungsteil können beispielsweise durch Dichtelemente und/oder durch die bewegliche Membran gegen Wasseraustritt zur Armatur abgedichtet sein.

Um eine besonders kostengünstige und dennoch besonders stabile Verbindung zwischen dem Ventilgehäuse und dem Verstelleinrichtungsteil in Montagestellung erreichen zu können, ist erfindungsgemäß die Klemmenvorrichtung aus zwei Teilen, vorzugsweise aus zwei identischen Teilen, ausgestaltet ist, die jeweils ein Kupplungselement und ein korrespondierendes Gegenkupplungselement zur Aufnahme des Kupplungselements des anderen Teils aufweisen, wodurch die beiden Teile miteinander, vorzugsweise lösbar, koppelbar sind. Durch die Herstellung nur eines Teils, das mit gleichen anderen Teilen koppelbar ist, ist eine besonders günstige Produktion der Einzelteile der Klemmenvorrichtung möglich.

Erfindungsgemäß weist die Klemmenvorrichtung zwei, vorzugsweise lösbar, miteinander verbindbare Teile auf, die in Montagestellung einen Hohlzylinder ausbilden, der das Ventilgehäuse und das Verstelleinrichtungsteil zumindest in einem Kopplungsbereich umschließt und dadurch fest verbindet, vorzugsweise wobei durch die Klemmenvorrichtung ein festes Verbinden des Ventilgehäuses und des Verstelleinrichtungsteils außerhalb der Armatur möglich ist. Die Klemmenvorrichtung ist in Montagestellung, vorzugsweise konzentrisch, um das Ventilgehäuse und das Verstelleinrichtungsteil angeordnet und hält diese auch außerhalb der Armatur zusammen. Durch das Verbinden des Ventilgehäuses und des Verstelleinrichtungsteils außerhalb der Armatur ist eine sehr einfache Montage möglich, da die beiden Teile zunächst verbindbar und anschließend in verbundenem Zustand in die Armatur einsetzbar sind.

Um ein Verrutschen oder eine Schiefstellung des Sanitärventils innerhalb des Ventilaufnahmeraums verhindern zu können, kann es vorteilhaft sein, wenn das Sanitärventil zumindest ein Fixierelement aufweist, dessen maximaler Außendurchmesser so ausgestaltet ist, dass das Sanitärventil im in die Armatur eingeführten Zustand in radialer Richtung fixiert ist, indem das zumindest eine Fixierelement an einer Innenwand eines oder des Ventilaufnahmeraums anliegt und das Sanitärventil daher ausschließlich in axialer Richtung in die Armatur einführbar oder aus der Armatur entnehmbar ist. Besonders vorteilhaft kann es weiter sein, wenn das Fixierelement oder die Fixierelemente durch die Klemmenvorrichtung und/oder durch das Anlageelement ausgebildet ist/sind.

Es kann weiter vorgesehen sein, dass die bewegliche Membran eine oder die bereits zuvor genannte Druckkammer abschließt, die zwischen dem Ventilgehäuse und einem oder dem Verstelleinrichtungsteil ausgestaltet ist, dass die Druckkammer über eine Befüllöffnung mit einer über einen Ventileingang einströmenden Flüssigkeit befüllbar ist, wobei die Druckkammer derart eingerichtet ist, dass sich innerhalb der Druckkammer ein Druck aufbaut, wenn eine Entlastungsöffnung geschlossen ist. Der innerhalb der Druckkammer aufgebaute Druck drückt einen Ventilkörper des Hauptventils in einen Ventilsitz. Das Hauptventil liegt dann in seiner Schließstellung vor. Die Entlastungsöffnung ist mittels des Pilotventils öffnen- oder schließbar. In Schließstellung der Entlastungsöffnung beaufschlagt der Ventilstößel die Entlastungsöffnung und verschließt diese. Bei Öffnung der Entlastungsöffnung baut sich der Druck innerhalb der Druckkammer ab, so dass sich die Membran mit dem Ventilkörper aus dem Ventilsitz entfernt und das Hauptventil geöffnet ist.

Die Erfindung betrifft ein Sanitärventil gemäß Anspruch 1 zum Einsatz in einer Armatur, mit einem Ventilgehäuse, einem Hauptventil, das eine bewegliche Membran aufweist, und einem Pilotventil, mit welchem das Hauptventil ansteuerbar ist, wobei eine Position der Membran durch eine Stellung eines Ventilstößels des Pi-lotventils vorgebbar ist, wobei an dem Ventilgehäuse ein einer Zulauföffnung des Ventilgehäuses zugeordnetes Schlauchbefestigungsmittel ausgebildet ist und/oder wobei an dem Ventilgehäuse ein einer Ablauföffnung des Ventilgehäuses zugeordnetes Mundstückbefestigungsmittel und/oder Strahlreglerbefestigungsmittel ausgebildet ist und/oder wobei das Sanitärventil eine Klemmenvorrichtung aufweist, mit der das Ventilgehäuse und ein Verstelleinrichtungsteil fest miteinander verbindbar oder verbunden sind.

Die Erfindung wird nun anhand von Ausführungsbeispielen beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Fig. 1: einen Axialschnitt durch ein erfindungsgemäßes Sanitärventil in Montagestellung eingesetzt in eine Armatur,
- Fig. 2: eine dreidimensionale Schrägansicht des Sanitärventils nach Fig. 1,
- Fig. 3: eine dreidimensionale Seitenansicht des Sanitärventils nach Fig. 1,
- Fig. 4: eine dreidimensionale Schrägansicht einer Klemmenvorrichtung des Sanitärventils,
- Fig. 5: eine dreidimensionale Seitenansicht der Klemmenvorrichtung,
- Fig. 6: einen Querschnitt der Klemmenvorrichtung nach Fig. 4,
- Fig. 7: eine Draufsicht auf die zusammengesetzten Teile der Klemmenvorrichtung.

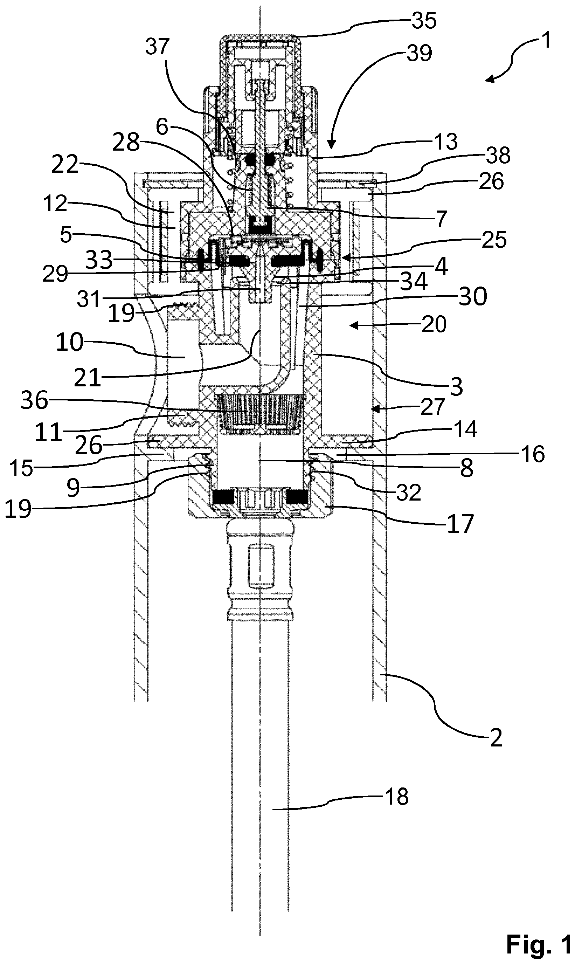

Figur 1 zeigt ein im Ganzen mit 1 bezeichnetes Sanitärventil, welches dazu eingerichtet ist, um in eine Armatur 2 eingesetzt zu werden. Das Sanitärventil 1 weist ein Ventilgehäuse 3, ein Hauptventil 4 mit einer beweglichen Membran 5 und ein Pilotventil 6 auf. Das Hauptventil 4 ist an sich in bekannter Weise eingerichtet. Die bewegliche Membran 5, ist aus einem elastischen Material ausgebildet. Das Hauptventil 4 weist einen Ventilkörper 33 und einen Ventilsitz 34 auf, in welchen der Ventilkörper 33 einsetzbar ist. In Offenstellung des Hauptventils 4 steht der Ventilkörper 33 außerhalb des Ventilsitzes 34, sodass Wasser an ihm vorbeiströmen kann. In Schließstellung des Hauptventils 4 ist der Ventilkörper 33 in den Ventilsitz 34 gedrückt, sodass kein Wasser durch den Ventilsitz 34 in eine Ablauföffnung 10 abfließen kann.

Der Ventilkörper 33 weist eine Entlastungsöffnung 31 auf, durch welche Wasser in die Ablauföffnung 10 ausfließen kann, wenn die Entlastungsöffnung 31 geöffnet ist. Die Entlastungsöffnung 31 ist mittels eines Ventilstößels 7 des Pilotventils 6 verschließbar. In Verschlussstellung der Entlastungsöffnung 31 baut sich ein Druck innerhalb einer Druckkammer 28 auf, indem Wasser über eine Befüllöffnung 29 aus einem Ventileingang 30 einströmt. Der Druck innerhalb der Druckkammer 28 drückt den Ventilkörper 33 des Hauptventils 4 in den Ventilsitz 34 und verschließt einen Kanal 21 des Sanitärventils 1. Das Hauptventil 4 liegt dann in Schließstellung vor.

Das Pilotventil 6 ist mittels eines Verstelleinrichtungsteils 13 bedienbar. Dabei kann mittels des Verstelleinrichtungsteils 13 die Stellung des Ventilstößels 7 relativ zum Ventilkörper 33 verändert werden. Die Stellung des Ventilstößels 7 ist durch ein Betätigungselement 35 einstellbar.

Vorzugsweise weist das Verstelleinrichtungsteil 13 eine Push-push-Mechanik auf, welche außenseitig mittels des Betätigungselements 35, insbesondere mittels eines Knopfes, bedienbar ist. Durch wiederholtes Drücken des Betätigungselements 35 kann zwischen verschiedenen Schaltpositionen umgeschaltet werden.

In Figur 1 ist eine Schaltposition dargestellt, in welcher das Sanitärventil 1, insbesondere das Hauptventil 4 in Offenstellung vorliegt.

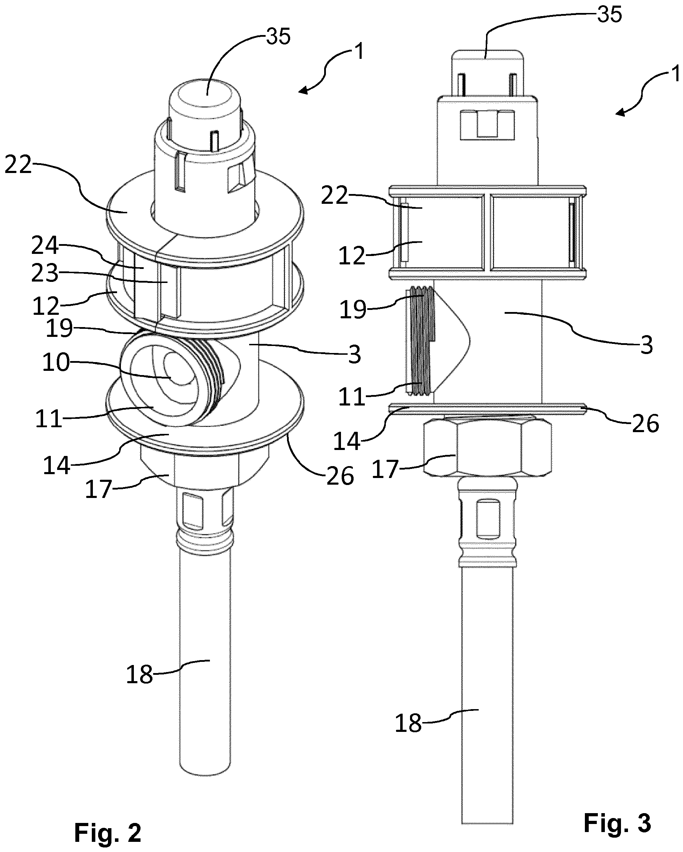

An dem Ventilgehäuse 3 ist ein der Zulauföffnung 8 des Ventilgehäuses 3 zugeordnetes Schlauchbefestigungsmittel 9 ausgebildet. Das Schlauchbefestigungsmittel 9 ist bei den Ausgestaltungen gemäß den Figuren 1-3 als Stutzen mit einem Außengewinde 19 ausgestaltet.

Das Schlauchbefestigungsmittel 9 weist einen maximalen Außendurchmesser auf, der kleiner ist, als ein maximaler Außendurchmesser eines am Ventilgehäuse 3 ausgebildeten Anlageelements 14. Das Anlageelement 14 ist zum Ansetzen des Ventilgehäuses 3 an eine Wand 15 der Armatur 2 ausgebildet. Dabei liegt das Anlageelement 14 von der Wand 15 in Fließrichtung des Wassers durch das Sanitärventil 1 abströmseitig an der Wand an, wenn sich das Ventil im Montagezustand befindet. Die Durchtrittsöffnung 16 weist einen lichten Innendurchmesser auf, der größer ist als der maximale Außendurchmesser des Schlauchbefestigungsmittels 9, sodass das Schlauchbefestigungsmittel 9 in die Durchtrittsöffnung 16 einführbar ist.

Das Sanitärventil 1 weist eine Befestigungsmuffe 17 mit einem zum Außengewinde 19 des Schlauchbefestigungsmittels 9 korrespondierenden Innengewinde 32 auf. Dadurch ist es möglich, den Schlauch 18 über die Befestigungsmuffe 17 direkt an das Ventilgehäuse 3 anzuschließen. Die Befestigungsmuffe 17 ist mit dem Schlauch 18 verbunden oder verbindbar.

Das Ventilgehäuse 3 bildet an einer Ablauföffnung 10 des Ventilgehäuses 3 ein Mundstückbefestigungsmittel 11 aus. Das Mundstückbefestigungsmittel 11 ist als ein Stutzen mit einem Außengewinde 19 ausgebildet, an welchen ein Mundstück direkt befestigbar oder befestigt ist. In Montagestellung, d.h. wenn das Sanitärventil 1 in einen Ventilaufnahmeraum 20 der Armatur 2 eingesetzt ist, ist das Sanitärventil 1 mittels des am Mundstückbefestigungsmittel 11 befestigten Mundstücks an der Armatur 2 fixiert oder fixierbar. Dadurch ist ein ungewolltes Herausrutschen oder Herausnehmen des Sanitärventils 1 aus der Armatur 2 nicht möglich, da das Mundstück mit zumindest einer Seitenwand am Rand eines Durchbruchs durch die Armatur 2 anschlägt. Der Durchbruch bildet eine Austrittsöffnung aus der Armatur 2, durch welche das befestigte Mundstück aus der Armatur 2 herausragt. Alternativ oder ergänzend dazu kann das Ventilgehäuse 3 an der Ablauföffnung 10 des Ventilgehäuses 3 auch ein Strahlreglerbefestigungsmittel ausbilden oder aufweisen. Damit ist eine Festlegung des Sanitärventils 1 auch anhand eines an das Strahlreglerbefestigungsmittel angebrachten Strahlreglers möglich.

Das Mundstück kann einen Strahlregler aufweisen, um einen Wasserstrahl mit gewünschten Eigenschaften zu erzeugen. Alternativ dazu ist es ebenfalls denkbar, dass ein Strahlregler zwischen dem Mundstück und dem Mundstückbefestigungsmittel 11 zwischengeschalten ist, beispielsweise indem er in das Mundstück einsetzbar ist.

Das Ventilgehäuse 3 und das Verstelleinrichtungsteil 13 bilden gemeinsam einen nach außen hin abgeschlossenen Kanal 21 aus. Dadurch kann verhindert werden, dass Wasser, welches durch den Kanal 21 strömt, mit der Armatur 2 in Verbindung kommt. Darüber hinaus ist es möglich, das Mundstück und/oder den Strahlregler direkt, also ohne weitere Adapterteile, an das Ventilgehäuse 3 anzuschließen, ohne dass weitere Verbindungsstücke zwischen dem Mundstück und/oder dem Strahlregler und dem Sanitärventil 1 zwischengeschaltet sind. Dies ermöglicht eine deutlich kompaktere und kostengünstigere Ausgestaltung.

Das Sanitärventil 1 weist eine Klemmenvorrichtung 12 auf, mit der das Ventilgehäuse 3 und das Verstelleinrichtungsteil 13 in einem Kupplungsbereich 25 des Sanitärventils 1 fest miteinander verbindbar oder verbunden sind. In Montagestellung des Sanitärventils 1 sind das Ventilgehäuse 3 und das Verstelleinrichtungsteil 13 fest miteinander verbunden.

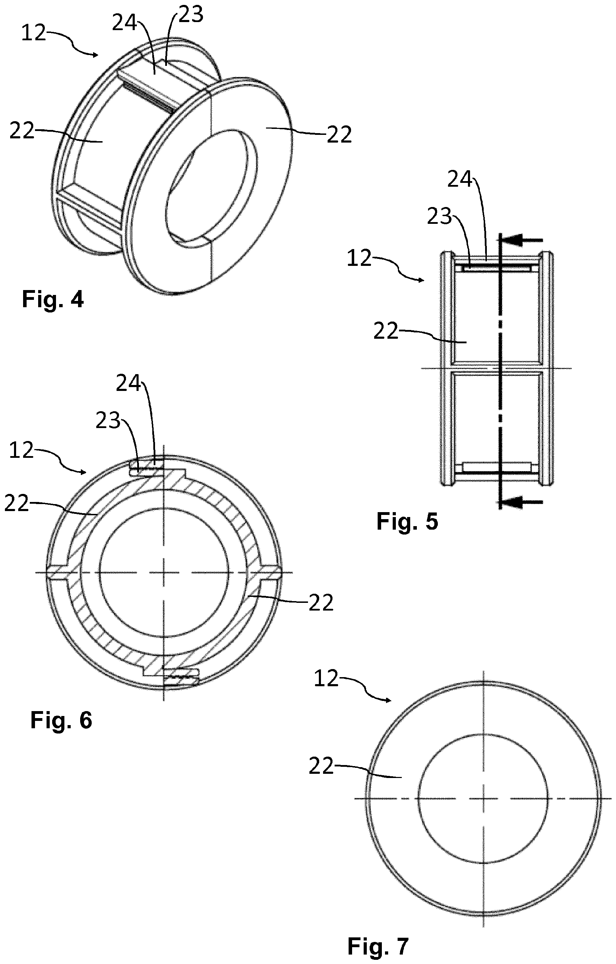

Die Klemmenvorrichtung 12 gemäß den Figuren 4-7 weist zwei identische Teile auf. Jedes Teil 22 ist dabei als eine Hälfte eines Hohlzylinders ausgebildet. Die beiden Teile 22 der Klemmenvorrichtung 12 sind zumindest teilweise um das Ventilgehäuse 3 und das Verstelleinrichtungsteil 13 herum anordenbar, wodurch diese fest miteinander koppelbar sind. Dabei weisen die beiden Teile 22 jeweils ein Kupplungselement 23 und ein dazu korrespondierendes Gegenkupplungselement 24 zur Aufnahme des Kupplungselements 23 des jeweils anderen Teils 22 auf. In Montagestellung greift das Kupplungselement 23 des einen Teils 22 in das Gegenkupplungselement 24 des anderen Teils 22 ein. Dadurch sind die beiden Teile miteinander koppelbar, vorzugsweise lösbar koppelbar.

Das Kupplungselement 23 und das Gegenkupplungselement 24 der Teile 22 der Klemmenvorrichtung 12 gemäß der Figuren 4-7 bilden gemeinsam eine Rastverbindung aus, wobei das Kupplungselement 23 in eine am Gegenkupplungselement 24 ausgebildete Öffnung einführbar und darin einrastbar ist.

Mittels der Klemmenvorrichtung 12 ist es möglich, das Ventilgehäuse 3 und das Verstelleinrichtungsteil 13 außerhalb der Armatur 2 bereits fest miteinander zu verbinden, was eine einfachere Montage des Sanitärventil 1 zulässt. Anschließend kann das Sanitärventil 1 mit dem am Ventilgehäuse 3 befestigten Schlauch 18 und dem mit dem Ventilgehäuse 3 gekoppelten Verstelleinrichtungsteil 13 in den Ventilaufnahmeraum 20 in der Armatur 2 eingesetzt werden.

Um das Verstelleinrichtungsteil 13, welches eine relativ empfindliche Mechanik aufweisen kann, gegen durch Stöße hervorgerufene Beschädigung während der Befestigung des Schlauchs 18 an dem Ventilgehäuse 3 schützen zu können, ist es möglich, die Kopplung des Ventilgehäuses 3 mit dem Verstelleinrichtungsteil 13 nach Befestigung des Schlauchs an dem Schlauchbefestigungsmittel 9 vorzunehmen. Dies ist durch den modularen Aufbau des Sanitärventils 1 möglich, wobei die Bedienmechanik des Verstelleinrichtungsteils 13 nach Anbringen des Schlauchs 18 am Ventilgehäuse 3 mittels der Klemmenvorrichtung 12 einfach mit dem Ventilgehäuse 3 koppelbar ist.

Um ein Verrutschen des Sanitärventils 1 in radialer Richtung in Montagestellung des Sanitärventils 1 vermeiden zu können, weist das Sanitärventil 1 mehrere Fixierelemente 26 auf. Der maximale Außendurchmesser der im Querschnitt kreisrund ausgestalteten Fixierelemente 26 ist dabei derart bemessen, dass das Sanitärventil 1 im in die Armatur 2 eingeführten Zustand in radialer Richtung fixiert ist, in dem die Fixierelemente 26 an einer Innenwand 27 des Ventilaufnahmeraums 20 anliegen. Dadurch ist das Sanitärventil 1 ausschließlich in axialer Richtung in eine Einschuböffnung 39 in die Armatur 2 einführbar oder aus der Armatur 2 entnehmbar.

Bei dem in den Figur 1-3 dargestellten Sanitärventil 1 sind die Fixierelemente 26 durch die Klemmenvorrichtung 12 und durch das Anlageelement 14 ausgebildet.

Zwischen Zulauföffnung 8 und Ventileingang 30 ist ein Filterelement 36 angeordnet, wodurch verhindert werden kann, dass zuströmende Partikel aus dem Schlauch 18 in das Hauptventil 4 gelangen.

Um das in Montagestellung in den Ventilaufnahmeraum 20 eingeführte Sanitärventil 1 besonders gut fixieren zu können, weist das Sanitärventil 1 einen Sicherungsring 38 auf, durch welchen das Ventil an der Armatur 2 fixierbar ist. Wie in Figur 1 dargestellt, ist der Sicherungsring 38 am Rand der Einschuböffnung 39 des Ventilaufnahmeraums 20 befestigbar. Durch den Sicherungsring 38 kann ein Herausrutschen oder Herausnehmen des Sanitärventils 1 in axialer Richtung aus der Einschuböffnung 39 verhindert werden. Vorzugsweise ist der Sicherungsring 38 als ein Sprengring ausgebildet, der im eingesetzten Zustand in eine, insbesondere als Nut ausgebildete, Ausnehmung an der Armatur 2 eingreift und dadurch das Sanitärventil 1 axial festlegt. Durch einen Sprengring ist eine besonders kostengünstige und dennoch stabile axiale Festlegung möglich.

### Bezugszeichenliste

- 1: Sanitärventil
- 2: Armatur
- 3: Ventilgehäuse
- 4: Hauptventil
- 5: bewegliche Membran
- 6: Pilotventil
- 7: Ventilstößel
- 8: Zulauföffnung
- 9: Schlauchbefestigungsmittel
- 10: Ablauföffnung
- 11: Mundstückbefestigungsmittel
- 12: Klemmenvorrichtung
- 13: Verstelleinrichtungsteil
- 14: Anlageelement
- 15: Wand der Armatur
- 16: Durchtrittsöffnung
- 17: Befestigungsmuffe
- 18: Schlauch
- 19: Außengewinde
- 20: Ventilaufnahmeraum
- 21: Kanal
- 22: Teil der Klemmenvorrichtung
- 23: Kupplungselement
- 24: Gegenkupplungselement
- 25: Kopplungsbereich
- 26: Fixierelement
- 27: Innenwand des Ventilaufnahmeraums
- 28: Druckkkammer
- 29: Befüllöffnung
- 30: Ventileingang
- 31: Entlastungsöffnung
- 32: Innengewinde
- 33: Ventilkörper
- 34: Ventilsitz
- 35: Betätigungselement
- 36: Filterelement
- 37: Push-push-Mechanik
- 38: Sicherungsring
- 39: Einschuböffnung

## Patentansprüche

1. Sanitärventil (1) zum Einsatz in eine Armatur (2), mit einem Ventilgehäuse (3), einem Hauptventil (4), das eine bewegliche Membran (5) aufweist, und einem Pilotventil (6), mit welchem das Hauptventil (4) ansteuerbar ist, wobei eine Position der Membran (5) durch eine Stellung eines Ventilstößels (7) des Pilotventils (6) vorgebbar ist, wobei das Sanitärventil (1) eine Klemmenvorrichtung (12) aufweist, mit der das Ventilgehäuse (3) und ein Verstelleinrichtungsteil (13) fest miteinander verbindbar oder verbunden sind, **dadurch gekennzeichnet, dass** die Klemmenvorrichtung (12) aus zwei Teilen (22) ausgestaltet ist, die jeweils ein Kupplungselement (23) und ein korrespondierendes Gegenkupplungselement (24) zur Aufnahme des Kupplungselements (23) des anderen Teils (22) aufweisen, wodurch die beiden Teile (22) miteinander koppelbar sind.

2. Sanitärventil (1) nach Anspruch 1, **dadurch gekennzeichnet, dass** die Klemmenvorrichtung (12) zwei miteinander verbindbare Teile (22) aufweist, die in Montagestellung einen Hohlzylinder ausbilden, der das Ventilgehäuse (3) und das Verstelleinrichtungsteil (13) zumindest in einem Kopplungsbereich (25) umschließt und dadurch fest verbindet.

3. Sanitärventil (1) nach einem der vorstehenden Ansprüche, **dadurch gekennzeichnet, dass** ein Schlauchbefestigungsmittel (9) einen maximalen Außendurchmesser aufweist, der kleiner ist als ein maximaler Außendurchmesser eines am Ventilgehäuse (3) ausgebildeten oder angebrachten Anlageelements (14) zum Anlegen des Ventilgehäuses (3) an eine Durchtrittsöffnung (16) in einer Wand (15) der Armatur (2), wobei die Durchtrittsöffnung (16) einen lichten Innendurchmesser hat, der größer ist als der maximale Außendurchmesser des Schlauchbefestigungsmittels (9).

4. Sanitärventil (1) nach Anspruch 3
**dadurch gekennzeichnet, dass** das Schlauchbefestigungsmittel (9) ein Außengewinde (19) zum Anschluss eines korrespondierenden Innengewindes (32), insbesondere eines korrespondierenden Innengewindes (32) einer Befestigungsmuffe (17) des Sanitärventils (1), die mit einem Schlauch (18) verbindbar oder verbunden ist, aufweist oder dass das Schlauchbefestigungsmittel (9) ein Innengewinde zum Anschluss eines korrespondierenden Außengewindes (19) , insbesondere eines korrespondierenden Außengewindes (19) einer Befestigungsmuffe (17) des Sanitärventils (1), die mit einem Schlauch (18) verbindbar oder verbunden ist, aufweist oder dass das Schlauchbefestigungsmittel (9) als Sicherungsplatte mit einer Schlauchaufnahme ausgestaltet ist.

5. Sanitärventil (1) nach einem der vorstehenden Ansprüche,
**dadurch gekennzeichnet, dass** das Sanitärventil (1) ein Mundstück aufweist, das direkt am Mundstückbefestigungsmittel (11) befestigbar oder befestigt ist, wobei das in einem Ventilaufnahmeraum (20) der Armatur (2) eingesetzte Sanitärventil (1) mittels des am Mundstückbefestigungsmittel (11) befestigten Mundstücks an der Armatur (2) fixierbar oder fixiert ist und/oder dass das Sanitärventil (1) einen Sicherungsring (38), insbesondere einen Sprengring, aufweist, durch welchen das Ventil an der Armatur (2) fixierbar ist.

6. Sanitärventil (1) nach Anspruch 5,
**dadurch gekennzeichnet, dass** das Sanitärventil (1) einen Strahlregler aufweist, der direkt am Strahlreglerbefestigungsmittel befestigbar oder befestigt ist, wobei das in einem Ventilaufnahmeraum (20) der Armatur (2) eingesetzte Sanitärventil (1) mittels des am Strahlreglerbefestigungsmittel befestigten Strahlreglers an der Armatur (2) fixierbar und/oder dass ein Mundstück einen Strahlregler aufweist oder ein Strahlregler zwischen einem oder dem Mundstück und der Ablauföffnung (10) angeordnet ist.

7. Sanitärventil (1) nach Anspruch 6,
**dadurch gekennzeichnet, dass** ein Mundstück ein Innengewinde und das Ventilgehäuse (3) an der Ablauföffnung (10) ein korrespondierendes Außengewinde (19) aufweist oder dass ein oder das Mundstück ein Außengewinde (19) und das Ventilgehäuse (3) an der Ablauföffnung ein korrespondierendes Innengewinde (32) aufweist, und/oder dass der Strahlregler ein Innengewinde und das Ventilgehäuse (3) an der Ablauföffnung (10) ein korrespondierendes Außengewinde (19) aufweist oder dass der Strahlregler ein Außengewinde (19) und das Ventilgehäuse (3) an der Ablauföffnung ein korrespondierendes Innengewinde (32) aufweist.

8. Sanitärventil (1) nach einem der vorstehenden Ansprüche,
**dadurch gekennzeichnet, dass** durch das Ventilgehäuse (3) und das Verstelleinrichtungsteil (13) ein zur Armatur (2) hin geschlossener Kanal (21) und/oder eine zur Armatur (2) hin geschlossene Druckkammer (28) ausbildet ist, wodurch kein Kontakt zwischen einer durch das Sanitärventil (1) strömenden Flüssigkeit und der Armatur (2) möglich ist.

9. Sanitärventil (1) nach einem der vorstehenden Ansprüche,
**dadurch gekennzeichnet, dass** die Klemmenvorrichtung (12) aus zwei identischen Teilen (22), ausgestaltet ist, die jeweils ein Kupplungselement (23) und ein korrespondierendes Gegenkupplungselement (24) zur Aufnahme des Kupplungselements (23) des anderen Teils (22) aufweisen, wodurch die beiden Teile (22) miteinander, vorzugsweise lösbar, koppelbar sind.

10. Sanitärventil (1) nach einem der vorstehenden Ansprüche,
**dadurch gekennzeichnet, dass** die Klemmenvorrichtung (12) zwei, vorzugsweise lösbar, miteinander verbindbare Teile (22) aufweist, die in Montagestellung einen Hohlzylinder ausbilden, der das Ventilgehäuse (3) und das Verstelleinrichtungsteil (13) zumindest in einem Kopplungsbereich (25) umschließt und dadurch fest verbindet, wobei durch die Klemmenvorrichtung (12) ein festes Verbinden des Ventilgehäuses (3) und des Verstelleinrichtungsteils (13) außerhalb der Armatur (2) möglich ist.

11. Sanitärventil (1) nach einem der vorstehenden Ansprüche,
**dadurch gekennzeichnet, dass** das Sanitärventil (1) zumindest ein Fixierelement (26) aufweist, dessen maximaler Außendurchmesser so ausgestaltet ist, dass das Sanitärventil (1) im in die Armatur (2) eingeführten Zustand in radialer Richtung fixiert ist, indem das zumindest eine Fixierelement (26) an einer Innenwand (27) eines oder des Ventilaufnahmeraums (20) anliegt und das Sanitärventil (1) daher ausschließlich in axialer Richtung in die Armatur (2) einführbar oder aus der Armatur (2) entnehmbar ist, vorzugsweise wobei das Fixierelement (26) oder die Fixierelemente (26) durch die Klemmenvorrichtung (12) und/oder durch das Anlageelement (14) ausgebildet ist/sind.

12. Sanitärventil (1) nach Anspruch 8,
**dadurch gekennzeichnet, dass** die bewegliche Membran (5) die Druckkammer (28) abschließt, die zwischen dem Ventilgehäuse (3) und dem Verstelleinrichtungsteil (13) ausgestaltet ist, dass die Druckkammer (28) über eine Befüllöffnung (29) mit einer über einen Ventileingang (30) einströmenden Flüssigkeit befüllbar ist, wobei die Druckkammer (28) derart eingerichtet ist, dass sich innerhalb der Druckkammer (28) ein Druck aufbaut, wenn eine Entlastungsöffnung geschlossen ist.

13. Sanitärventil (1) nach einem der vorstehenden Ansprüche,
**dadurch gekennzeichnet, dass** an dem Ventilgehäuse (3) ein, einer Zulauföffnung (8) des Ventilgehäuses (3) zugeordnetes, Schlauchbefestigungsmittel (9) ausgebildet ist, so dass an dem Ventilgehäuse (3) ein Schlauch (8) direkt anschließbar ist.

14. Sanitärventil (1) nach Anspruch 5,
**dadurch gekennzeichnet, dass** an dem Ventilgehäuse (3) ein, einer Ablauföffnung (10) des Ventilgehäuses (3) zugeordnetes, Mundstückbefestigungsmittel (11) und/oder ein Strahlreglerbefestigungsmittel ausgebildet ist.

## Claims

1. Sanitary valve (1) for insertion into a fitting (2), comprising a valve housing (3), a main valve (4) which has a movable diaphragm (5), and a pilot valve (6) by which the main valve (4) is actuatable, wherein a position of the diaphragm (5) is predefinable by a setting of a valve tappet (7) of the pilot valve (6), wherein the sanitary valve (1) has a clamping device (12) by which the valve housing (3) and an adjustment device part (13) are firmly connectable or connected to each other, **characterized in that** the clamping device (12) is composed of two parts (22), which each have a coupling element (23) and a corresponding mating coupling element (24) for receiving the coupling element (23) of the other part (22), as a result of which the two parts (22) are couplable to each other.

2. Sanitary valve (1) according to Claim 1, **characterized in that** the clamping device (12) has two parts (22) which are connectable to each other and which, in the assembled position, form a hollow cylinder that encloses and thus firmly connects the valve housing (3) and the adjustment device part (13) at least in a coupling region (25).

3. Sanitary valve (1) according to one of the preceding claims, **characterized in that** a tube securing means (9) has a maximum external diameter which is smaller than a maximum external diameter of a bearing element (14) which is formed or mounted on the valve housing (3) and with which the valve housing (3) bears on a through-opening (16) in a wall (15) of the fitting (2), wherein the through-opening (16) has a clear internal diameter which is greater than the maximum external diameter of the tube securing means (9).

4. Sanitary valve (1) according to Claim 3, **characterized in that** the tube securing means (9) has an outer thread (19) for attachment of a corresponding inner thread (32), in particular a corresponding inner thread (32) of a securing sleeve (17) of the sanitary valve (1) connectable or connected to a tube (18), or **in that** the tube securing means (9) has an inner thread for attachment of a corresponding outer thread (19), in particular a corresponding outer thread (19) of a securing sleeve (17) of the sanitary valve (1) connectable or connected to a tube (18), or **in that** the tube securing means (9) is configured as a securing plate with a tube receptacle.

5. Sanitary valve (1) according to one of the preceding claims, **characterized in that** the sanitary valve (1) has a mouthpiece which is securable or secured directly on the mouthpiece securing means (11), wherein the sanitary valve (1) inserted in a valve-receiving space (20) of the fitting (2) is fixable or fixed on the fitting (2) by means of the mouthpiece secured on the mouthpiece securing means (11), and/or **in that** the sanitary valve (1) has a securing ring (38), in particular a snap ring, by which the valve is fixable on the fitting (2).

6. Sanitary valve (1) according to Claim 5, **characterized in that** the sanitary valve (1) has a jet regulator which is securable or secured directly on the jet regulator securing means, wherein the sanitary valve (1) inserted in a valve-receiving space (20) of the fitting (2) is fixable on the fitting (2) by means of the jet regulator secured on the jet regulator securing means, and/or **in that** a mouthpiece has a jet regulator, or a jet regulator is arranged between a or the mouthpiece and the outflow opening.

7. Sanitary valve (1) according to Claim 6, **characterized in that** a mouthpiece has an inner thread and the valve housing (3) at the outflow opening (10) has a corresponding outer thread (19), or **in that** a or the mouthpiece has an outer thread (19) and the valve housing (3) at the outflow opening (10) has a corresponding inner thread (32), and/or **in that** the jet regulator has an inner thread and the valve housing (3) at the outflow opening (10) has a corresponding outer thread (19), or **in that** the jet regulator has an outer thread (19) and the valve housing (3) at the outflow opening has a corresponding inner thread (32).

8. Sanitary valve (1) according to one of the preceding claims, **characterized in that** a channel (21) closed towards the fitting (2) and/or a pressure chamber (28) closed towards the fitting (2) is formed through the valve housing (3) and the adjustment device part (13), as a result of which no contact is possible between the fitting (2) and a liquid flowing through the sanitary valve (1).

9. Sanitary valve (1) according to one of the preceding claims, **characterized in that** the clamping device (12) is composed of two identical parts (22), which each have a coupling element (23) and a corresponding mating coupling element (24) for receiving the coupling element (23) of the other part (22), as a result of which the two parts (22) are couplable to each other, preferably releasably.

10. Sanitary valve (1) according to one of the preceding claims, **characterized in that** the clamping device (12) has two parts (22) which are connectable to each other, preferably releasably, and which, in the assembled position, form a hollow cylinder that encloses and thus firmly connects the valve housing (3) and the adjustment device part (13) at least in a coupling region (25), wherein the clamping device (12) permits a firm connection of the valve housing (3) and of the adjustment device part (13) outside the fitting (2).

11. Sanitary valve (1) according to one of the preceding claims, **characterized in that** the sanitary valve (1) has at least one fixing element (26) whose maximum external diameter is configured such that the sanitary valve (1), in the state when inserted into the fitting (2), is fixed in the radial direction, since the at least one fixing element (26) bears on an inner wall (27) of a or the valve-receiving space (20), and the sanitary valve (1) is therefore insertable into the fitting (2) or removable from the fitting (2) exclusively in an axial direction, preferably wherein the fixing element (26) or the fixing elements (26) is/are formed by the clamping device (12) and/or by the bearing element (14).

12. Sanitary valve (1) according to Claim 8, **characterized in that** the movable diaphragm (5) closes the pressure chamber (28) which is configured between the valve housing (3) and the adjustment device part (13), **in that** the pressure chamber (28) is fillable, via a filling opening (29), with a liquid that flows in via a valve inlet (30), wherein the pressure chamber (28) is set up in such a way that a pressure builds up inside the pressure chamber (28) when a relief opening is closed.

13. Sanitary valve (1) according to one of the preceding claims, **characterized in that** a tube securing means (9) which is assigned to an inflow opening (8) of the valve housing (3) is formed on the valve housing (3), such that a tube (8) is directly attachable to the valve housing (3).

14. Sanitary valve (1) according to Claim 5, **characterized in that** a mouthpiece securing means (11) and/or a jet regulator securing means assigned to an outflow opening (10) of the valve housing (3) is formed on the valve housing (3).

## Revendications

1. Vanne sanitaire (1) destinée à être utilisée dans un robinet (2), avec un corps de vanne (3), une vanne principale (4) qui possède une membrane mobile (5), et une vanne pilote (6) avec laquelle la vanne principale (4) peut être commandée, dans laquelle une position de la membrane (5) peut être prédéfinie par une position d'un poussoir de vanne (7) de la vanne pilote (6), la vanne sanitaire (1) possédant un dispositif de serrage (12) avec lequel le corps de vanne (3) et un élément de dispositif de réglage (13) peuvent être fixés ou sont fixés ensemble, **caractérisée en ce que** le dispositif de serrage (12) est constitué de deux parties (22) qui présentent chacune un élément d'accouplement (23) et un élément d'accouplement opposé correspondant (24) pour recevoir l'élément d'accouplement (23) de l'autre partie (22), de sorte que les deux parties (22) peuvent être accouplées l'une avec l'autre.

2. Vanne sanitaire (1) selon la revendication 1, **caractérisée en ce que** le dispositif de serrage (12) présente deux parties (22) pouvant être reliées l'une avec l'autre qui forment en position de montage un cylindre creux qui entoure le corps de vanne (3) et l'élément de dispositif de réglage (13) au moins dans une zone d'accouplement (25) et les relie ainsi de manière fixe.

3. Vanne sanitaire (1) selon une des revendications précédentes, **caractérisée en ce qu'**un moyen de fixation de tuyau (9) possède un diamètre extérieur maximum qui est inférieur à un diamètre extérieur maximum d'un élément d'application (14) formé ou monté sur le corps de vanne (3) pour appliquer le corps de vanne (3) contre une ouverture de passage (16) dans une paroi (15) du robinet (2), dans laquelle l'ouverture de passage (16) possède un diamètre intérieur libre qui est supérieur au diamètre extérieur maximum du moyen de fixation de tuyau (9).

4. Vanne sanitaire (1) selon la revendication 3, **caractérisée en ce que** le moyen de fixation de tuyau (9) présente un filetage extérieur (19) pour le raccordement d'un filetage intérieur correspondant (32), un particulier d'un filetage intérieur correspondant (32) d'un manchon de fixation (17) de la vanne sanitaire (1) qui peut être reliée ou est reliée avec un tuyau (18) ou que le moyen de fixation de tuyau (9) présente un filetage intérieur pour le raccordement d'un filetage extérieur correspondant (19), un particulier d'un filetage extérieur correspondant (19) d'un manchon de fixation (17) de la vanne sanitaire (1) qui peut être reliée ou est reliée avec un tuyau (18) ou que le moyen de fixation de tuyau (9) est configuré comme une plaque de retenue avec un réceptacle de tuyau.

5. Vanne sanitaire (1) selon une des revendications précédentes, **caractérisée en ce que** cette vanne sanitaire (1) possède un embout qui peut être fixé ou est fixé directement sur le moyen de fixation d'embout (11), la vanne sanitaire (1) insérée dans un espace de réception de vanne (20) du robinet (2) pouvant être fixée ou étant fixée sur le robinet (2) au moyen de l'embout fixé sur le moyen de fixation d'embout (11), et/ou que la vanne sanitaire (1) possède une bague de retenue (38), en particulier une bague élastique, par laquelle la vanne peut être fixée sur le robinet (2).

6. Vanne sanitaire (1) selon la revendication 5, **caractérisée en ce que** cette vanne sanitaire (1) possède un régulateur de jet qui peut être fixé ou est fixé directement sur le moyen de fixation de régulateur de jet, la vanne sanitaire (1) insérée dans un espace de réception (20) du robinet (2) pouvant être fixée sur le robinet (2) au moyen du régulateur de jet fixé sur le moyen de fixation de régulateur de jet et/ou qu'un embout présente un régulateur de jet ou qu'un régulateur de jet est disposé entre un ou l'embout et l'ouverture d'évacuation (10).

7. Vanne sanitaire (1) selon la revendication 6, **caractérisée en ce qu'**un embout possède un filetage intérieur et le corps de vanne (3) un filetage extérieur (19) correspondant au niveau de l'ouverture d'évacuation (10) ou qu'un ou l'embout possède un filetage extérieur (19) et le corps de vanne (3) un filetage intérieur (32) correspondant au niveau de l'ouverture d'évacuation, et/ou que le régulateur de jet possède un filetage intérieur et le corps de vanne (3) un filetage extérieur (19) correspondant au niveau de l'ouverture d'évacuation (10) ou que le régulateur de jet possède un filetage extérieur (19) et le corps de vanne (3) un filetage intérieur (32) correspondant au niveau de l'ouverture d'évacuation.

8. Vanne sanitaire (1) selon une des revendications précédentes, **caractérisée en ce qu'**à travers le corps de vanne (3) et l'élément de dispositif de réglage (13) sont formées une canalisation (21) fermée du côté du robinet (2) et/ou une chambre de pression (28) fermée du côté du robinet (2) par le biais desquelles un contact entre un liquide s'écoulant à travers la vanne sanitaire (1) et le robinet (2) est possible.

9. Vanne sanitaire (1) selon une des revendications précédentes, **caractérisée en ce que** le dispositif de serrage (12) est constitué de deux parties (22) identiques qui présentent chacune un élément d'accouplement (23) et un élément d'accouplement opposé correspondant (24) pour recevoir l'élément d'accouplement (23) de l'autre partie (22), de sorte que les deux parties (22) peuvent être accouplées l'une avec l'autre, de préférence de façon amovible.

10. Vanne sanitaire (1) selon une des revendications précédentes, **caractérisée en ce que** le dispositif de serrage (12) présente de deux parties (22) pouvant être reliées l'une avec l'autre, de préférence de façon amovible, qui forment en position de montage un cylindre creux qui entoure le corps de vanne (3) et l'élément de dispositif de réglage (13) au moins dans une zone d'accouplement (25) et les relie ainsi de manière fixe, de sorte que, grâce au dispositif de serrage (12), une liaison fixe du corps de vanne (3) et de l'élément de dispositif de réglage (13) hors du robinet (2) est possible.

11. Vanne sanitaire (1) selon une des revendications précédentes, **caractérisée en ce que** cette vanne sanitaire (1) présente au moins un élément de fixation (26) dont le diamètre extérieur maximum est conçu de telle sorte que la vanne sanitaire (1), lorsqu'elle est insérée dans le robinet (2), est fixée en direction radiale, de sorte que l'au moins un élément de fixation (26) est appliqué sur une paroi intérieure (27) d'un ou de l'espace de réception de vanne (20) et que la vanne sanitaire (1) ne peut donc être insérée dans le robinet (2) ou extraite du robinet (2) qu'en direction axiale, l'élément de fixation (26) ou les éléments de fixation (26) étant de préférence constitué(s) par le dispositif de serrage (12) et/ou l'élément d'application (14).

12. Vanne sanitaire (1) selon la revendication 8, **caractérisée en ce que** la membrane mobile (5) obture la chambre de pression (28) qui est configurée entre le corps de vanne (3) et l'élément de dispositif de réglage (13), que la chambre de pression (28) peut être remplie par une ouverture de remplissage (29) avec un liquide affluant par une entrée de vanne (30), la chambre de pression (28) étant aménagée de sorte qu'une pression peut s'accroitre à l'intérieur de la chambre de pression (28) quand une ouverture de décharge est fermée.

13. Vanne sanitaire (1) selon une des revendications précédentes, **caractérisée en ce que** sur le corps de vanne (3) est constitué un moyen de fixation de tuyau (9) associé à une ouverture d'admission (8) du corps de vanne (3), de sorte qu'un tuyau (8) peut être raccordé directement au corps de vanne (3).

14. Vanne sanitaire (1) selon la revendication 5, **caractérisée en ce que** sur le corps de vanne (3) sont constitués un moyen de fixation d'embout (11) et/ou un moyen de fixation de régulateur de jet associés à une ouverture d'évacuation (10) du corps de vanne (3).
